# EUROPÄISCHE PATENTANMELDUNG

(11) **EP 1 357 239 A2**
(43) Veröffentlichungstag der Anmeldung: **29.10.2003**
(21) Anmeldenummer: 03009144.1
(22) Anmeldetag: 22.04.2003
(51) Int. Cl.: E04F 15/022

(54) **Fussbodenplatte**

(30) Priorität: 24.04.2002 DE 20206460 U
(71) Anmelder: HW -Industries GmbH & Co.KG, 49201 Dissen (DE)
(72) Erfinder: Kettler, Volker, 33824 Werther (DE)
(74) Vertreter: TER MEER STEINMEISTER & PARTNER GbR

(57) **Zusammenfassung**

Eine Parkett- oder Dielenbodenplatte ist versehen mit Furnier-Deckschicht oder Laminat-Paneel mit einer Trägerplatte (10) aus Weichholz, Sperrholz, MDF, HDF oder dergleichen, mit wenigstens zwei auf einer Trägerplatte (10) liegenden Brettelementen. Die längsseitigen Ränder der Bodenplatte (10, 16) sind durch Phasen (20, 22) abgeschrägt. In der oder den Trennlinien zwischen den Brettelementen ist eine V-Nut (18) eingearbeitet.

## Beschreibung

Die Erfindung betrifft eine Parkett- oder Dielenbodenplatte mit Furnier-Deckschicht oder Laminatpaneel mit einem Kern aus Weichholz, Sperrholz, MDF, HDF oder dergleichen, mit wenigstens zwei nebeneinander auf einer Bodenplatte liegenden Brettelementen.

Parkettböden werden heute zumeist nicht durch Verlegen einzelner Bretter oder "Stäbe" hergestellt, sondern unter Verwendung von Bodenplatten, auf denen eine Mehrzahl von Brettern oder Stäben zusammengefasst ist. Entsprechendes gilt für Dielenböden mit einer Furnierschicht als Deckschicht auf einer Trägerplatte. Das Zusammenfassen mehrerer Bretter oder Stäbe zu einer Einheit erleichert zwar das Verlegen und hat häufig auch Vorteile in Bezug auf die Stabilität des verlegten Bodens, kann jedoch den Nachteil haben, dass der Aufbau des Bodens aus grösseren Bodenplatten optisch erkennbar ist, der Boden also nicht wie echtes Parkett, z.B. aus Parkettstäben von 50 - 75 mm Breite, oder echter Dielenboden wirkt. Auch sogenannte Laminatpaneele sind Platten, die ein Oberflächen-Erscheinungsbild haben, das den Eindruck von zwei oder drei nebeneinanderliegenden Brettern oder Stäben hervorruft. Allerdings wird bei Laminatpaneelen dieser Eindruck nicht durch die Verwendung von Echtholz oder Furniermaterial erreicht, sondern durch ein gedrucktes Dekor. Obwohl diese Dekore heute das Erscheinungsbild von Holz- oder Steinböden oder anderen Böden täuschend echt wiedergeben, ist bei näherem Hinsehen die Täuschung als solche doch zu erkennen.

Der Erfindung liegt daher die Aufgabe zugrunde, eine Parkett-, Dielenbodenoder Laminatplatte, wie sie oben beschrieben wird, derart auszubilden, dass sie so weit wie möglich an vergleichbare "echte" Böden angenähert ist.

Diese Aufgabe wird bei einem Boden der obigen Art dadurch gelöst, dass die längsseitigen Ränder der Bodenplatte durch Fasen abgeschrägt sind und dass in der oder den Trennlinien zwischen den Brettelementen eine V-Nut eingearbeitet ist.

Auf diese Weise wirken die einzelnen Brettelemente oder Stäbe der Bodenplatte so, als handele es sich tatsächlich um unabhängige Bretter oder Stäbe, die jeweils für sich verlegt worden sind.

Im allgemeinen beträgt die Deckschicht beispielsweise zwischen 0,1 mm bei Dielenböden mit Furnier oder Laminat und etwa 3,6 mm bei Parkettplatten. Dementsprechend sollte die Breite der V-Nut so gewählt sein, dass die V-Nut nicht in die Trägerplatte eindringt, sondern innerhalb der Deckschicht verbleibt. Naturgemäss hängt die Tiefe der V-Nut auch von dem Spitzenwinkel ab, der zwischen 70 und 90° liegen sollte. Dementsprechend sollten die Phasen-Winkel 35 bis 45° betragen und die Breite der Phasen sollte gleich der halben Breite der V-Nut sein, so dass die Phasen zweier benachbarter Platten der Geometrie der V-Nut entsprechen.

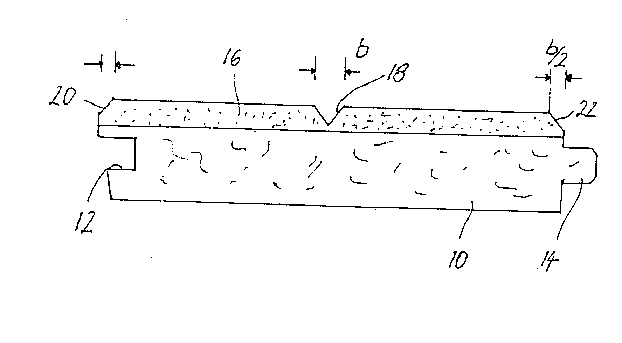

Im folgenden werden bevorzugte Ausführungsbeispiele anhand der beigefügten Zeichnung näher erläutert.

Die einzige Figur zeigt einen Querschnitt durch eine erfindungsgemässe Bodenplatte.

Die in der Zeichnung dargestellte Bodenplatte besteht aus einer Trägerplatte 10, die, wie z.B. bei Parkett üblich, aus Weichholz, aber auch aus Sperrholz, MDF, HDF etc. bestehen kann. Die Trägerplatte 10 weist auf der linken Seite der Zeichnung eine Nut 12 und auf der rechten Seite eine Feder 14 auf, mit denen benachbarte Platten verbunden werden können. Anstelle dieser einfachen Nut-Feder-Verbindung können auch modifizierte Nut-Feder-Verbindungen verwendet werden, die eine Verriegelung gegen horizontale Trennung der Platten ermöglichen und in vielen Ausführungsformen bekannt sind. Auf der Trägerplatte 10 ist eine Deckschicht 16 angebracht, im Falle von Parkett eine Echtholzschicht von beispielsweise > 2 mm, insbesondere 3,5 bis 4,0 mm Dicke. Bei furnierten Bodenplatten, etwa Dielenbodenplatten, wird die Deckschicht durch das naturgemäss wesentlich dünnere Furnier gebildet. Das gilt auch für Laminat-Böden. In jedem Falle wird die Deckschicht aus nur zwei parallelen Streifen gebildet, so dass von der Oberseite her der optische Eindruck entsteht, dass zwei nebeneinander liegende Bretter oder auch Stäbe vorhanden seien.

Da die beiden benachbarten Stäbe jedoch eine glatte, zusammenhängende Oberfläche bilden, bleibt für den Betrachter erkennbar, dass es sich um zwei Stäbe auf einer gemeinsamen Trägerplatte handelt, also nicht um einen "echten" Parkett- oder Dielenboden.

Gemäss der vorliegenden Erfindung wird daher der Einzelstabcharakter der beiden Stäbe auf der Trägerplatte 10 dadurch betont, dass in die Trennlinie der beiden Stäbe eine V-Nut 18 eingefräst wird, die so tief ist, dass sie innerhalb der Deckschicht 16 verbleibt und nicht in die Trägerplatte 10 eindringt. Bei der dargestellten Ausführungsform hat die V-Nut beispielsweise einen Spitzenwinkel von 80°. Dementsprechend sind die Neigungswinkel von zwei Phasen 20, 22 gewählt, deren Neigung dem halben Spitzenwinkel der V-Nut 18 entspricht. Dementsprechend beträgt die Breite der Phasen 20, 22 die Hälfte der Breite b der V-Nut, so dass die Breite der Phasen in der Zeichnung mit ^{b}/₂ bezeichnet ist.

Während in der Zeichnung ein Zwei-Stab-Element gezeigt ist, kann die Erfindung auch auf Drei-Stab- und mehr Mehr-Stab-Elemente angewendet werden.

Die Aussage, dass die V-Nut in der Deckschicht verbleibt und die Trägerplatte nicht anschneidet, wird sich vor allem auf Parkettplatten beziehen, die über ausreichendes Deckmaterial verfügen. Wenn die obere Deckschicht aus Furnier oder einem Laminat besteht, kann die V-Nut unter Umständen auch bis in die Trägerplatte hineingezogen werden. In diesem Fall wird es in der Regel erforderlich sein, die Schnittflächen der Deckschicht und der Trägerplatte in geeigneter Weise einzufärben.

## Patentansprüche

1. Parkett- oder Dielenbodenplatte mit Furnier-Deckschicht oder Laminat-Paneel mit einer Trägerplatte (10) aus Weichholz, Sperrholz, MDF, HDF oder dergleichen, mit wenigstens zwei auf einer Trägerplatte (10) liegenden Brettelementen, **dadurch gekennzeichnet, dass** die längsseitigen Ränder der Bodenplatte (10, 16) durch Phasen (20, 22) abgeschrägt sind und dass in der oder den Trennlinien zwischen den Brettelementen eine V-Nut (18) eingearbeitet ist.

2. Parkett- oder Dielenbodenplatte nach Anspruch 1, **dadurch gekennzeichnet, dass** die V-Nut (18) einen Spitzenwinkel von 70 bis 90° aufweist.

3. Parkett- oder Dielenbodenplatte nach Anspruch 1 oder 2, **dadurch gekennzeichnet, dass** die V-Nut eine Breite b von 1 - 4 mm, insbesondere 1,5 - 3 mm aufweist.

4. Parkett- oder Dielenbodenplatte nach einem der Ansprüche 1 bis 3, **dadurch gekennzeichnet, dass** die Tiefe der V-Nut (18) geringer als die Dicke der Deckschicht (16) ist.
